# EUROPÄISCHE PATENTSCHRIFT

(11) **EP 0 647 806 B1**
(45) Veröffentlichungstag und Bekanntmachung des Hinweises auf die Patenterteilung: **23.10.1996**
(21) Anmeldenummer: 94113260.7
(22) Anmeldetag: 25.08.1994
(51) Int. Cl.: F16K 7/12

(54) **Anordnung zur Befestigung der Membrane eines Ventils**
Valve diaphragm fixing assembly
Assemblage de fixation d'un diaphragme d'une soupape

(30) Priorität: 06.10.1993 CH 3009/93
(43) Veröffentlichungstag der Anmeldung: 12.04.1995
(73) Patentinhaber: Georg Fischer Rohrleitungssysteme AG, CH-8201 Schaffhausen (CH)
(72) Erfinder: Martin, Heiniger, CH-8200 Schaffhausen (CH)
(74) Vertreter: Szilagyi, Marianne

(56) Entgegenhaltungen:
- DE-B- 1 014 806
- GB-A- 2 256 696
- US-A- 1 647 823
- US-A- 1 988 907

## Beschreibung

Die Erfindung betrifft eine Anordnung zur Befestigung der Membrane eines Ventils wie sie im Oberbegriff von Anspruch 1 gekennzeichnet ist.

Die heutigen handelsüblichen Membranen werden in zwei Gruppen eingeteilt, und zwar in Elastomer-Membranen, welche mittels eines Gewindeanschlusses an der Druckspindel bzw. Druckstück befestigt werden und in Polytetrafluorethylen (PTFE)-Membranen, mit Stützmembranen aus einem Elastomer, welche mittels Bajonett-Anschluss befestigt werden. Beim Bajonett-Anschluss (bekannt durch DE-A1-30 00 510) wird vermieden, dass die Schliesskraft von der Druckspindel über den Membranstift eingeleitet wird, wobei ein axialer Verschiebeweg zwischen Druckstück oder Druckspindel und Membrane eingebaut ist. Ein unzulässig hoher Druck auf den Membranstift kann zur Beschädigung der Membrane und des Strömungskörpers führen.

Aufgabe der vorliegenden Erfindung ist die Schaffung einer Anordnung zur Befestigung der Membrane gemäss der eingangs genannten Art, welche für beide Membrantypen geeignet ist.

Erfindungsgemäss wird diese Aufgabe durch die kennzeichnenden Merkmale von Anspruch 1 gelöst.

Besonders vorteilhafte Ausbildungen der Erfindung sind in den abhängigen Ansprüchen gekennzeichnet.

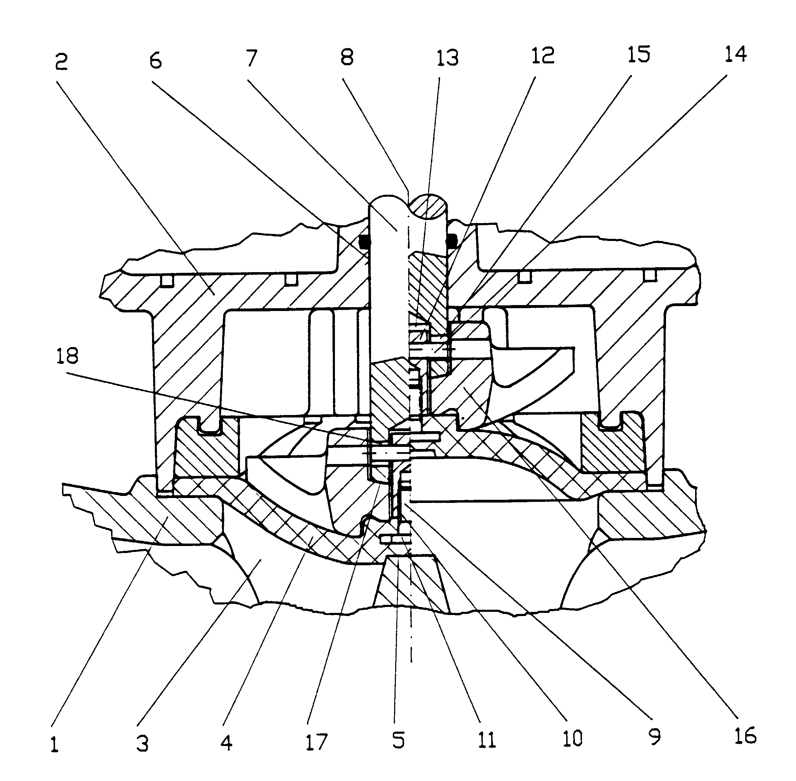

Die Erfindung ist in der beiliegenden Zeichnung beispielsweise dargestellt und nachfolgend beschrieben.

Die einzige Figur zeigt einen Teilschnitt durch ein Ventil mit der Befestigungsanordnung einer Absperrmembrane teilweise in Schliess- und teilweise in Öffnungs-Stellung.

Die Figur zeigt einen Ausschnitt eines Membranventils mit einem, einen Durchflusskanal 3 aufweisenden unteren Gehäuseteil 1 und einem oberen Gehäuseteil 2. Zwischen den beiden Gehäuseteilen 1, 2 ist eine Membrane 4 eingespannt angeordnet, welche in der links dargestellten Schliessstellung an einer Dichtfläche 5 des unteren Gehäuseteiles 1 den Durchfluss absperrend fest anliegt.

Die Membrane 4 besteht entweder aus einem Elastomer oder zweischichtig aus Elastomer und Polytetrafluorethylen (PTFE), wobei die Polytetrafluorethylen-Schicht auf der Seite des Durchflussmediums angeordnet ist.

Der obere Gehäuseteil 2 weist eine Führung 6 für eine Druckspindel 7 auf, welche mittels eines weiter nicht dargestellten Antriebes in Richtung der Spindelachse 8 axial verschiebbar ist. Die Druckspindel 7 ist mit der Membrane 4 wie nachfolgend beschrieben verbunden.

Die Membrane 4 ist mit einem Gewinde 10 aufweisenden Bolzen 9 versehen, wobei der Bolzen 9 mittels eines Flansches 11 fest in der Membrane 4 verankert ist. Der Bolzen 9 ist mittels des Gewindes 10 in einer Gewindehülse 12 befestigt, welche axial verschiebbar an der Druckspindel 7 angeordnet ist. Die Druckspindel 7 weist ein in Richtung der Spindelachse 8 angeordnetes Sackloch 13 auf, in welches ein Teil der Gewindehülse 12 hineinragt. Ein quer zur Spindelachse 8 angeordneter Stift 14 - vorzugsweise ein Knebelkerbstift - ist fest mit der Gewindehülse 12 verbunden. Die beidseits über die Gewindehülse 12 hinausragenden Enden des Stiftes 14 sind in Bohrungen 15 der Druckspindel 7 angeordnet, welche im Durchmesser drei bis sechs mm grösser sind als der Durchmesser des Stiftes. Vorzugsweise sind die Bohrungen 15 vier mm grösser als der Stiftdurchmesser.

Zwischen der Druckspindel 7 und der Absperrmembrane ist ein Druckstück 16 angeordnet, mittels welchem die Membrane 4 in Schliessstellung formmässig gegen die Dichtflächen 5 des unteren Gehäuseteils 1 gedrückt wird.

Bei der Öffnungsbewegung wird die Axialkraft von der Druckspindel 7 über die Anlage des Stiftes 14 in der Bohrung 15 auf die Gewindehülse 12 und durch den Bolzen 9 auf die Membrane 4 übertragen.

Beim Absperren des Ventils wirkt die axiale Schliesskraft von einer stirnseitigen Fläche 17 der Druckspindel 6 über das Druckstück 16 auf die Membrane 4, wobei sich diese in Schliessstellung auf der Seite der Dichtfläche 5 und im Bereich der Anlage zwischen Membrane 4 und Druckstück 16 elastisch verformt.

Durch das Spiel 18 zwischen Stift 14 und Bohrung 15 wird der Stift 14, die Gewindehülse 12, der Bolzen 9 und somit auch dessen Verankerung in der Membrane von der Schliesskraft entlastet. Eine Beschädigung der Membrane 4 im Bereich der Verankerung mit dem Bolzen 11 durch die Schliesskraft wird somit weitgehend ausgeschlossen.

Durch das Spiel 18 ist auch eine einwandfreie Anpassung der Membrane 4 an die Dichtfläche 5 gewährleistet.

Diese Anpassung wird zusätzlich durch die sphärische Ausbildung der stirnseitigen Anlageflächen 17 zwischen Druckspindel 7 und Druckstück 16 ermöglicht.

## Patentansprüche

1. Anordnung zur Befestigung einer Membrane (4) eines Ventils, wobei ein in der Membrane (4) Verankerter Bolzen (9) mit einer Druckspindel (7) verbunden ist und zwischen der Druckspindel (7) und der Membrane (4) ein Druckstück (16) angeordnet ist, dadurch gekennzeichnet, daß eine axial verschiebbare Gewindehülse (12) mittels eines Stiftes (14) in der Druckspindel (7) gehalten ist und der ein Gewinde (10) aufweisende Bolzen (9) in die Gewindehülse (12) eingeschraubt ist.

2. Anordnung nach Anspruch 1, dadurch gekennzeichnet, daß der als Knebelkerbstift ausgebildete Stift (14) fest mit der Gewindehülse (12) verbunden ist und der Stift (14) in Bohrungen (15) der Druckspindel (7) gelagert ist, welche im Durchmesser größer sind als der Durchmesser des Stiftes (14).

3. Anordnung nach Anspruch 1 oder 2, dadurch gekennzeichnet, daß die Bohrungen (15) in der Druckspindel (7) im Durchmesser 3 bis 6 mm, vorzugsweise 4 mm größer sind als der Durchmesser des Stiftes (14).

## Claims

1. Arrangement for securing a diaphragm (4) of a valve, wherein a bolt (9) anchored in the diaphragm (4) is connected to a pressure spindle (7) and arranged between the pressure spindle (7) and the diaphragm (4) is a pressure piece (16), characterised in that an axially movable threaded sleeve (12) is retained by means of a pin (14) in the pressure spindle (7) and the rod (9) having a thread (10) is screwed into the threaded sleeve (12).

2. Arrangement according to claim 1, characterised in that the pin (14) constructed as a slotted pin is fixedly connected to the threaded sleeve (12), and the pin (14) is mounted in bores (15) of the pressure spindle (7) which are greater in diameter than the diameter of the pin (14).

3. Arrangement according to claim 1 or 2, characterised in that the bores (15) in the pressure spindle (7), are in diameter 3 to 6 mm, preferably 4 mm, larger than the diameter of the pin (14).

## Revendications

1. Dispositif de fixation d'un diaphragme (4) d'une soupape, selon lequel un axe (9), ancré dans le diaphragme (4), est relié à un arbre de poussée (7) et selon lequel un élément de poussée (16) est agencé entre l'arbre de poussée (7) et le diaphragme (4), caractérisé en ce qu'une douille taraudée (12), qui peut se déplacer axialement, est maintenue au moyen d'une goupille (14) dans l'arbre de poussée (7) et en ce que l'axe (9) présentant un filetage (10) est vissé dans la douille taraudée (12).

2. Dispositif selon la revendication 1, caractérisé en ce que la goupille (14), fabriquée sous forme de goupille cannelée bombée, est fixée à la douille taraudée (12) et en ce que la goupille (14) est logée dans des trous (15) de l'arbre de poussée (7) qui ont un diamètre supérieur à celui de la goupille (14).

3. Dispositif selon la revendication 1 ou 2, caractérisé en ce que les trous (15) dans l'arbre de poussée (7) ont un diamètre supérieur de 3 à 6 mm, de préférence 4 mm, à celui de la goupille (14).
